(19) Europäisches Patentamt
European Patent Office
Office européen des brevets

(11) **EP 3 271 925 B1**

(12) **FASCICULE DE BREVET EUROPEEN**

(45) Date de publication et mention
de la délivrance du brevet:
**06.03.2019 Bulletin 2019/10**

(21) Numéro de dépôt: **16715019.2**

(22) Date de dépôt: **16.03.2016**

(51) Int Cl.:
*H01B 3/30* (2006.01)    *H01B 3/44* (2006.01)
*H01B 7/02* (2006.01)

(86) Numéro de dépôt international:
**PCT/FR2016/050586**

(87) Numéro de publication internationale:
**WO 2016/146946 (22.09.2016 Gazette 2016/38)**

(54) **CABLE ELECTRIQUE POUR L'ALIMENTATION D'EQUIPEMENTS ELECTRIQUES**

STROMKABEL ZUR STROMVERSORGUNG EINER ELEKTRISCHEN VORRICHTUNG

ELECTRIC CABLE FOR THE POWER SUPPLY OF ELECTRICAL APPARATUS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **17.03.2015 FR 1552164**

(43) Date de publication de la demande:
**24.01.2018 Bulletin 2018/04**

(73) Titulaire: **Safran Electrical & Power
31702 Blagnac Cedex (FR)**

(72) Inventeurs:
• **KOLIATENE, Flavien
31704 Blagnac Cedex (FR)**
• **DUNAND, Michel
31704 Blagnac Cedex (FR)**

(74) Mandataire: **Desormiere, Pierre-Louis et al
Cabinet Beau de Loménie
158, rue de l'Université
75340 Paris Cedex 07 (FR)**

(56) Documents cités:
EP-A1- 1 498 909     EP-A1- 2 557 572
FR-A1- 2 617 325     US-B2- 7 074 880

**Description**

Arrière-plan de l'invention

La présente invention se rapporte au domaine général des câbles électriques utilisés dans la transmission de puissance électrique à haute tension et à la limitation de l'apparition de décharges partielles au sein de ces câbles. L'invention concerne plus particulièrement mais non exclusivement la limitation de l'apparition de décharges partielles dans les câbles et harnais électriques utilisés dans les aéronefs.

L'avènement des avions de plus en plus électriques se traduit par l'utilisation accrue d'équipements électriques qui doivent être alimentés et contrôlés, dans des environnements parfois hostiles, grâce à de nombreux harnais électriques. Un harnais électrique est un ensemble de fils ou câbles électriques de différentes jauges groupés en faisceau électrique et cheminant ensemble et aboutissant à des connecteurs. Dans certains cas le harnais peut être blindé ou disposé dans des goulottes métalliques pour les protéger de phénomènes électromagnétiques. Sa fiabilité est indispensable pour la disponibilité de l'ensemble des dispositifs du système électrique de puissance. La présence de matériaux isolants permet d'assurer l'isolation entre les différents circuits électriques lorsque les câbles sont assemblés au sein d'un harnais. On appelle système d'isolation électrique (SIE) l'ensemble des isolants gazeux et solides qui forme l'isolation des câbles entre eux et les structures conductrices se trouvant à proximité du harnais.

L'utilisation de ces équipements électriques induit l'apparition de phénomènes indésirables, notamment lorsque les équipements sont soumis à des tensions électriques élevées (par exemple, des tensions alternatives de 230 VAC, des tensions continues de +/- 270 VDC, ou encore de 540 VDC). Ces hautes tensions, associées à des environnements aéronautiques où la pression, la température et l'hygrométrie peuvent varier notablement selon les phases de vol de l'aéronef, entraînent l'apparition de décharges partielles au niveau du système d'isolation électrique des câbles du harnais.

Les décharges partielles sont des décharges électriques localisées pouvant court-circuiter partiellement l'intervalle isolant séparant deux conducteurs d'un harnais. En pratique, elles se manifestent par la formation de micro-arcs électriques dans les gaz situés à proximité (par exemple entre deux câbles isolés) ou à l'intérieur de l'isolant (par exemple dans des cavités) des câbles électriques. Ces décharges peuvent entraîner la dégradation lente et progressive du matériau isolant du système d'isolation électrique des câbles, et occasionner sa rupture prématurée. La fiabilité et la disponibilité de la chaine électrique de puissance peut donc être fortement impactée par ces décharges partielles.

Les hautes tensions utilisées augmentent le champ électrique dans les gaz du SIE, ce qui entraîne l'apparition de décharges partielles. Une solution connue à ce problème consiste à augmenter la distance entre les câbles voisins, ce qui a pour effet de réduire ce champ électrique. Une autre solution est de répartir différemment le champ électrique entre le matériau isolant et les gaz du SIE, en utilisant par exemple des câbles ayant une enveloppe isolante d'épaisseur bien plus importante. L'augmentation de cette épaisseur permet d'augmenter le champ électrique dans la partie isolante du SIE et de réduire le champ électrique dans le gaz entre les câbles, ce qui réduit l'apparition de décharges partielles.

Cependant, une telle solution pose un problème d'intégration car la masse du harnais et son encombrement général sont considérablement augmentés. Or, la tendance actuelle est au contraire à la diminution de la masse et de l'encombrement des éléments présents dans l'aéronef afin de réduire notamment sa consommation de carburant.

Il est donc souhaitable de disposer de câbles électriques et de harnais légers et compacts qui permettent d'éviter l'apparition de décharges partielles.

Objet et résumé de l'invention

La présente invention a donc pour but principal de pallier de tels inconvénients en proposant un câble électrique destiné à être utilisé dans un harnais pour l'alimentation d'équipements électriques, comprenant au moins une âme conductrice comprenant au moins un brin conducteur, et une enveloppe isolante disposée autour de l'âme conductrice, caractérisé en ce que l'enveloppe isolante présente une permittivité diélectrique relative inférieure ou égale à 2 et comprend une première couche comprenant un polymère aérogel, et une deuxième couche, recouvrant la première couche, comprenant un polymère fluoré.

Une autre solution pour répartir différemment le champ électrique entre le matériau isolant et les gaz du SIE, est de diminuer la permittivité diélectrique relative de l'enveloppe isolante, ce qui a pour effet d'augmenter le champ dans la partie isolante du SIE et de réduire le champ électrique dans le gaz entre les câbles. Les Inventeurs ont alors déterminé, pour une épaisseur d'enveloppe isolante identique aux épaisseurs des enveloppes isolantes des câbles utilisés traditionnellement dans des applications à basse tension, que les décharges partielles étaient éliminées pour des tensions inférieures à 2 kilovolts crête lorsque la permittivité diélectrique relative du matériau formant l'enveloppe isolante est inférieure ou égale à 2 (pour des câbles de jauge (AWG) 24 à 2). Cette valeur prend également en compte les variations possibles de l'environnement du câble, notamment une baisse de pression combinée éventuellement à une augmentation de la température, comme cela peut être le cas dans certaines zones de l'aéronef.

En outre, l'utilisation d'une première couche en polymère aérogel permet de disposer d'un matériau isolant dont la permittivité est fortement diminuée par la présence de pores nanoscopiques contenant du gaz (dont la permittivité diélectrique relative est sensiblement égale à 1) et ainsi de pouvoir réduire la taille de cette couche et donc la masse du câble. La deuxième couche en polymère fluoré est externe et permet quant à elle d'assurer la résistance thermique et chimique (notamment aux fluides utilisés dans les aéronefs, par exemple : Skydrol, huile, kérosène, etc.) ainsi que la résistance à l'« arc tracking », elle participe aussi à l'élimination des décharges partielles se produisant dans le système d'isolation électrique. L'utilisation de telles couches permet de conserver un diamètre de câble similaire à celui des câbles utilisés traditionnellement pour des applications à basse tension.

De préférence, l'enveloppe isolante comprend en outre une troisième couche, disposée entre l'âme conductrice et la première couche, comprenant un polymère fluoré. Cette disposition est avantageuse notamment dans le cas où l'âme conductrice comprend une pluralité de brins. En effet, cette troisième couche permet de combler les interstices pouvant subsister entre l'âme conductrice et le système d'isolation électrique, lieux propices à l'apparition de décharges partielles.

De préférence également, le polymère aérogel est un Polyimide aérogel.

De préférence encore, le polymère fluoré peut être choisi parmi : le Poly-Tétrafluoroéthylène (PTFE), le Perfluoroalkoxy (PFA), l'Éthylène Tétrafluoroéthylène (ETFE), l'Éthylène Propylène Fluoré (EPF).

Afin de réduire encore la probabilité d'apparition de décharges partielles dans le système d'isolation électrique et notamment dans la première couche, la taille des pores contenant du gaz du polymère aérogel est de préférence inférieure ou égale à 5 micromètres.

La deuxième couche peut être réalisée en utilisant un matériau basse densité poreux comprenant des pores ayant une taille qui est de préférence inférieure ou égale à 10 micromètres.

De préférence, une épaisseur de l'enveloppe isolante est comprise entre 0,15 mm et 0,50 mm.

Afin de faciliter la réalisation du câble selon l'invention, il est avantageux de disposer d'une première couche constituée par un ruban enroulé avec un taux de recouvrement d'au moins 51%. Aussi, une couche comprenant un polymère fluoré est de préférence constituée par un ruban enroulé avec un taux de recouvrement d'au moins 55%.

Selon un exemple de réalisation de l'invention, l'enveloppe isolante peut comprendre : une première couche comprenant du Polyimide aérogel, une deuxième couche comprenant du Poly-Tétrafluoroéthylène (PTFE) basse densité, et une troisième couche comprenant du Poly-Tétrafluoroéthylène (PTFE).

L'invention concerne aussi un harnais électrique comprenant au moins un câble électrique tel que celui décrit précédemment.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :

- la figure 1 est une vue schématique d'un harnais électrique,
- les figures 2A et 2B représentent schématiquement un câble électrique monobrin selon un mode de réalisation de l'invention, et
- la figure 3 est une vue schématique en coupe d'un câble électrique multibrins selon un autre mode de réalisation de l'invention.

Description détaillée de l'invention

La présente invention propose un câble électrique qui peut être utilisé notamment, mais non exclusivement, pour la transmission d'énergie à haute tension entre des équipements électriques ou électroniques embarqués dans des aéronefs. Comme expliqué ci-après en détails, la structure du câble de l'invention est remarquable en ce qu'elle permet d'éviter l'apparition de décharges partielles au sein du système d'isolation électrique (SIE) d'un harnais électrique lorsqu'il est utilisé notamment à haute tension.

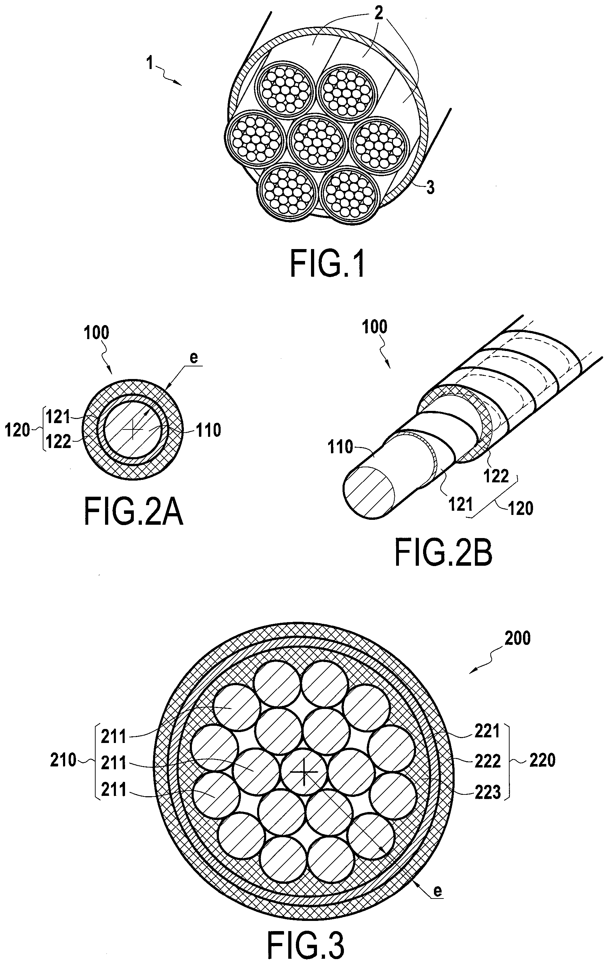

La figure 1 montre un harnais électrique 1 pouvant être utilisé dans un aéronef. Il comprend ici sept câbles électriques 2 formant un faisceau entouré par une gaine de protection 3. Les câbles électriques selon l'invention sont parfaitement utilisables dans un tel harnais 1, qui est par ailleurs objet de la présente invention.

Les figures 2A et 2B détaillent un câble électrique 100 selon un mode de réalisation de l'invention. Le câble 100 comprend une âme conductrice 110 constituée ici d'un unique brin conducteur, ainsi qu'une enveloppe isolante 120 disposé autour de l'âme 110. Un brin conducteur (ou fil conducteur) est constitué par exemple de cuivre, d'aluminium, d'un alliage métallique, ou de tout autre matériau conduisant l'électricité. L'enveloppe isolante 120 est quant à elle constituée de matériaux isolants.

Afin de supprimer le phénomène de décharges partielles dans et autour de l'enveloppe isolante 120 lors de l'utilisation du câble à haute tension (pour des tensions inférieures à 2 kilovolts à pression atmosphérique et température ambiante notamment) et dans les conditions environnementales d'un aéronef, les Inventeurs ont déterminé que la permittivité diélectrique relative de l'enveloppe isolante doit être inférieure ou égale à 2. Cette valeur résulte de l'étude de la tension d'apparition des décharges partielles en fonction de la permittivité diélectrique relative du matériau formant l'enveloppe isolante des câbles dans le cas d'un câble recouvert d'une tresse de blindage, où il a été observé que la tension d'apparition des décharges partielles est supérieure à 2 kilovolts crête quand la permittivité diélectrique relative du matériau formant l'enveloppe isolante des câbles est inférieure ou égale à 2.

Pour parvenir à de telles valeurs de permittivité diélectrique relative tout en conservant une faible épaisseur, l'enveloppe isolante 120 comprend tout d'abord une première couche 121 en polymère aérogel, qui recouvre l'âme 110 et est directement au contact de celle-ci. Cette première couche, puisqu'elle est aérée par des pores nanoscopiques (la permittivité diélectrique relative de l'air présent dans les pores étant sensiblement égale à 1), permet de réduire la permittivité diélectrique relative de l'enveloppe isolante 120 tout en réduisant son épaisseur, sa masse et en évitant l'apparition de décharges partielles. En outre, la taille des pores du polymère aérogel est de préférence inférieure à 10 micromètres pour assurer encore une meilleure protection contre les décharges partielles au sein de cette première couche 121, qui tendent à apparaître dans des cavités de taille plus importante.

L'enveloppe isolante 120 comprend par ailleurs une deuxième couche 122 en polymère fluoré, recouvrant la première couche 121 en polymère aérogel, qui assure notamment la résistance thermique et chimique ainsi que la résistance à l'arc tracking du câble 100. Par résistance chimique on entend la résistance au contact des fluides utilisés à bord de l'aéronef, comme par exemple le Skydrol, de l'huile ou du kérosène. Cette couche participe aussi à l'élimination du phénomène de décharges partielles.

Le polymère aérogel de la première couche 121 peut notamment être constitué par un Polyimide aérogel, ou tout autre type de polymère aéré. La deuxième couche peut quant à elle comprendre un polymère fluoré choisi par exemple parmi les suivants : Poly-Tétrafluoroéthylène (PTFE ou Téflon™), Perfluoroalkoxy (PFA), Éthylène Tétrafluoroéthylène (ETFE ou Tefzel™), Éthylène Propylène Fluoré (EPF), etc.

On pourra réaliser l'enveloppe isolante 120 en enroulant des rubans autour et tout le long de l'âme conductrice 110 pour les première et deuxième couches 121, 122, comme illustré sur la figure 2B.

A titre d'exemple, la première couche 121 peut être constituée d'un ruban de Polyimide aérogel d'une épaisseur de 30 $\mu$m enroulé autour de l'âme conductrice 110 avec un taux de recouvrement d'au moins 51 %. La deuxième couche 122 peut être constituée quant à elle d'un ruban de Poly-Tétrafluoroéthylène (PTFE) basse densité d'une épaisseur d'environ 150 $\mu$m enroulée autour de la première couche 121 avec un taux de recouvrement d'au moins 55 %. Dans cet exemple, la permittivité diélectrique relative de l'enveloppe isolante 120 est de l'ordre de 1,98.

Le taux de recouvrement correspond à la proportion avec laquelle le ruban se recouvre lui-même après avoir fait un tour autour de l'âme conductrice 110, ou de la première couche 121 le cas échéant. De manière générale, le taux de recouvrement d'une couche comprenant un polymère aérogel est supérieur à 51%, et celui d'une couche comprenant un polymère fluoré est supérieur à 55%.

La figure 3 montre un câble 200 selon un autre mode de réalisation de l'invention. Le câble 200 comprend une âme conductrice 210 constituée d'une multitude de brins conducteurs 211, ainsi qu'une enveloppe isolante 220 comprenant trois couches 221, 222 et 223.

Les couches 221 et 222 correspondent respectivement aux première et deuxième couches 121 et 122 du câble 100 monobrin des figures 2A et 2B, et disposent respectivement des mêmes caractéristiques.

Dans ce mode de réalisation, une troisième couche 223 est disposée entre l'âme conductrice 210 et la première couche 221 en polymère aérogel de l'enveloppe isolante 220. Cette couche, qui est de préférence réalisée en un polymère fluoré choisi parmi ceux présentés plus haut, permet de combler les interstices pouvant se trouver entre l'enveloppe isolante 220 et l'âme conductrice 210 afin d'éviter que des décharges partielles ne s'y produisent.

De la même manière que pour le câble 100, les trois couches 221, 222, 223 formant l'enveloppe isolante 220 du câble 200 peuvent être réalisées à partir de rubans qui sont enroulés successivement autour de l'âme conductrice 210 avec, pour la couche en polymère aérogel 221, un taux de recouvrement d'au moins 51%, et pour les couches en polymère fluoré 222, 223, un taux de recouvrement d'au moins 55%.

A titre d'exemple, un câble 200 multibrins selon l'invention peut présenter : une première couche 221 réalisée à partir d'un ruban de Polyimide aérogel de 30 $\mu$m d'épaisseur enroulé avec un taux de recouvrement d'au moins 51 %, une deuxième couche 222 réalisée à partir d'un ruban de PTFE basse densité (par exemple ayant une densité de l'ordre de 2 g/cm$^3$) d'une épaisseur d'environ 75 $\mu$m, et une troisième couche 223 réalisée à partir d'un ruban de PTFE non fritté d'une épaisseur d'environ 75 $\mu$m, les deuxième et troisième couches étant enroulées avec un taux de recouvrement d'au moins 55 %. Dans cet exemple, la permittivité diélectrique relative de l'enveloppe isolante 220 est de l'ordre de 1,96.

De préférence, les enveloppes isolantes 120, 220 des câbles 100, 200 selon l'invention présentent une épaisseur e qui est comprise entre 0,15 mm et 0,25 mm, voire comprise entre 0,15 et 0,50 mm. L'épaisseur e étant, dans le cas du câble 200 multibrins, définie là où l'épaisseur de l'enveloppe isolante 220 est la plus faible.

Comme indiqué précédemment, la permittivité diélectrique relative de l'enveloppe isolante doit être inférieure ou égale à 2 pour éviter l'apparition de décharges partielles lorsque le câble est utilisé à haute tension. Le calcul théorique et le principe de mesure exposés ci-dessous permettent de vérifier qu'un câble répond à cette exigence.

Pour les câbles électriques selon l'invention présentés précédemment, la permittivité diélectrique relative de l'enveloppe isolante peut être déduite de manière théorique à partir du calcul de la capacité linéique du câble en configuration cylindrique (ce qui est équivalent à un câble coaxial). La formule (A) ci-dessous donne la capacité linéique C (exprimée en F/m) d'un câble coaxial en fonction du rayon de son âme conductrice $r_1$, du rayon externe pris en limite de l'enveloppe isolante $r_2$, de la permittivité diélectrique du vide $\varepsilon_0$ et de la permittivité diélectrique relative de l'enveloppe isolante $\varepsilon$.

$$ (A) \qquad C = \frac{2\pi\varepsilon_0\varepsilon_r}{\ln\left(\frac{r_2}{r_1}\right)} $$

Lorsque l'enveloppe isolante est multicouches, comme c'est le cas dans la présente invention, chaque couche i possède une capacité $C_i$. La capacité $C_{eq}$ équivalente de l'enveloppe isolante multicouche (qui est équivalent à un ensemble de capacités $C_i$ mises en série) est donnée par la formule (B) ci-dessous.

$$ (B) \qquad \frac{1}{C_{eq}} = \sum_i \frac{1}{C_i} $$

Ainsi, connaissant la capacité $C_i$ de chaque couche formant le matériau isolant, on peut finalement calculer, en combinant les formules (A) et (B), une estimation de la permittivité diélectrique relative de l'enveloppe isolante pour vérifier qu'elle est bien inférieure ou égale à 2, conformément à l'invention.

Il est aussi possible de mesurer expérimentalement la permittivité diélectrique relative de l'enveloppe isolante en prenant un échantillon de câble (par exemple d'une longueur de 100 cm) muni de l'enveloppe isolante multicouches, et en mettant en place autour du câble une référence de masse pouvant prendre la forme d'une gaine conductrice par exemple solide ou liquide, afin de reproduire la configuration d'un câble coaxial.

L'âme conductrice ainsi que la référence de masse sont connectées à un analyseur d'impédance pour effectuer les mesures de la capacité en circuit ouvert, typiquement dans une gamme de fréquences de 100 Hz à 40 MHz. Les valeurs de capacité mesurées (généralement de l'ordre d'une dizaine de picofarad) permettent ainsi de déduire par calcul, à partir de l'équation (A), une estimation de la permittivité diélectrique relative $\varepsilon_r$ de l'enveloppe isolante du câble testé.

Il est à noter que dans le présent exposé les expressions « compris entre ... et ... » ou « au moins de ... » doivent être comprises comme incluant les bornes.

**Revendications**

1. Câble électrique (100 ; 200) destiné à être utilisé dans un harnais (1) pour l'alimentation d'équipements électriques, comprenant au moins :

    une âme conductrice (110 ; 120) comprenant au moins un brin conducteur (211), et
    une enveloppe isolante (120 ; 220) disposée autour de l'âme conductrice,

    **caractérisé en ce que** l'enveloppe isolante présente une permittivité diélectrique relative inférieure ou égale à 2 et comprend :

    une première couche (121 ; 221) comprenant un polymère aérogel, et
    une deuxième couche (122 ; 222), recouvrant la première couche, comprenant un polymère fluoré.

2. Câble selon la revendication 1, **caractérisé en ce que** l'enveloppe isolante (220) comprend en outre une troisième couche (223), disposée entre l'âme conductrice (210) et la première couche (221), comprenant un polymère fluoré.

3. Câble selon l'une quelconque des revendications 1 et 2, **caractérisé en ce que** le polymère aérogel est un Polyimide aérogel.

4. Câble selon l'une quelconque des revendications 1 à 3, **caractérisé en ce que** le polymère fluoré est choisi parmi : le Poly-Tétrafluoroéthylène (PTFE), le Perfluoroalkoxy (PFA), l'Éthylène Tétrafluoroéthylène (ETFE), l'Éthylène Propylène Fluoré (EPF).

5. Câble selon l'une quelconque des revendications 1 à 4, **caractérisé en ce que** la taille des pores du polymère aérogel est inférieure ou égale à 10 micromètres.

6. Câble selon l'une quelconque des revendications 1 à 5, **caractérisé en ce qu'**une épaisseur (e) de l'enveloppe isolante (120 ; 220) est comprise entre 0,15 mm et 0,50 mm.

7. Câble selon l'une quelconque des revendications 1 à 6, **caractérisé en ce que** la première couche (121 ; 221) est constituée par un ruban enroulé avec un taux de recouvrement d'au moins 51%.

8. Câble selon l'une quelconque des revendications 1 à 7, **caractérisé en ce qu'**une couche comprenant un polymère fluoré est constituée par un ruban enroulé avec un taux de recouvrement d'au moins 55%.

9. Câble selon l'une quelconque des revendications 2 à 8, **caractérisé en ce que** l'enveloppe isolante comprend :

    une première couche (221) comprenant un Polyimide aérogel,
une deuxième couche (222) comprenant du Poly-Tétrafluoroéthylène (PTFE) basse densité, et
une troisième couche (223) comprenant du Poly-Tétrafluoroéthylène (PTFE).

10. Harnais électrique (1) comprenant au moins un câble électrique selon l'une quelconque des revendications 1 à 9.

**Patentansprüche**

1. Elektrisches Kabel (100; 200), das dazu bestimmt ist, in einem Kabelbaum (1) zur Versorgung von elektrischen Einrichtungen verwendet zu werden, wenigstens umfassend:

   eine leitende Seele (110; 120), die wenigstens eine leitende Ader (211) umfasst, und
   einen Isoliermantel (120; 220), der um die leitende Seele herum angeordnet ist,

   **dadurch gekennzeichnet, dass** der Isoliermantel eine relative dielektrische Permittivität von weniger als oder gleich 2 aufweist und umfasst:

   eine erste Schicht (121; 221), die ein Aerogel-Polymer umfasst, und
   eine zweite Schicht (122; 222), die die erste Schicht bedeckt und ein Fluorpolymer umfasst.

2. Kabel nach Anspruch 1, **dadurch gekennzeichnet, dass** der Isoliermantel (220) ferner eine dritte Schicht (223) umfasst, die zwischen der leitenden Seele (210) und der ersten Schicht (221) angeordnet ist und ein Fluorpolymer umfasst.

3. Kabel nach einem der Ansprüche 1 und 2, **dadurch gekennzeichnet, dass** das Aerogel-Polymer ein Polyimid-Aerogel ist.

4. Kabel nach einem der Ansprüche 1 bis 3, **dadurch gekennzeichnet, dass** das Fluorpolymer ausgewählt ist aus: Polytetrafluorethylen (PTFE), Perfluoralkoxy (PFA), Ethylentetrafluorethylen (ETFE), Fluorethylenpropylen (FEP).

5. Kabel nach einem der Ansprüche 1 bis 4, **dadurch gekennzeichnet, dass** die Größe der Poren des Aerogel-Polymers kleiner als oder gleich 10 Mikrometer ist.

6. Kabel nach einem der Ansprüche 1 bis 5, **dadurch gekennzeichnet, dass** eine Dicke (e) des Isoliermantels (120; 220) im Bereich zwischen 0,15 mm und 0,50 mm liegt.

7. Kabel nach einem der Ansprüche 1 bis 6, **dadurch gekennzeichnet, dass** die erste Schicht (121; 221) aus einem Band besteht, das mit einem Abdeckungsgrad von wenigstens 51 % gewickelt ist.

8. Kabel nach einem der Ansprüche 1 bis 7, **dadurch gekennzeichnet, dass** eine Schicht, die ein Fluorpolymer umfasst, aus einem Band besteht, das mit einem Abdeckungsgrad von wenigstens 55 % gewickelt ist.

9. Kabel nach einem der Ansprüche 2 bis 8, **dadurch gekennzeichnet, dass** der Isoliermantel umfasst:

   eine erste Schicht (221), die ein Polyimid-Aerogel umfasst,
   eine zweite Schicht (222), die Polytetrafluorethylen (PTFE) niedriger Dichte umfasst, und
   eine dritte Schicht (223), die Polytetrafluorethylen (PTFE) umfasst.

10. Elektrischer Kabelbaum (1), der wenigstens ein elektrisches Kabel nach einem der Ansprüche 1 bis 9 umfasst.

**Claims**

1. An electrical cable (100; 200) intended to be used in a harness (1) to supply power to pieces of electrical equipment, comprising at least:

   a conductive core (110; 120) comprising at least one conductive strand (211), and
   an insulating jacket (120; 220) placed around the conductive core,

   **characterized in that** the insulating jacket has a relative dielectric permittivity lower than or equal to 2 and comprises:

   a first layer (121; 221) comprising a polymer aerogel, and
   a second layer (122; 222), covering the first layer, comprising a fluoropolymer.

2. The cable as claimed in claim 1, **characterized in that** the insulating jacket (220) furthermore comprises a third layer (223), placed between the conductive core (210) and the first layer (221), comprising a fluoropolymer.

3. The cable as claimed in either one of claims 1 and 2, **characterized in that** the polymer aerogel is a polyimide aerogel.

4. The cable as claimed in any one of claims 1 to 3, **characterized in that** the fluoropolymer is chosen

from: polytetrafluoroethylene (PTFE), perfluoroalkoxy alkane (PFA), ethylene tetrafluoroethylene (ETFE), and fluorinated ethylene propylene (FEP).

5. The cable as claimed in any one of claims 1 to 4, **characterized in that** the pore size of the polymer aerogel is smaller than or equal to 10 microns.

6. The cable as claimed in any one of claims 1 to 5, **characterized in that** a thickness (e) of the insulating jacket (120; 220) is comprised between 0.15 mm and 0.50 mm.

7. The cable as claimed in any one of claims 1 to 6, **characterized in that** the first layer (121; 221) consists of a strip wound with a degree of overlap of at least 51%.

8. The cable as claimed in any one of claims 1 to 7, **characterized in that** a layer comprising a fluoropolymer consists of a strip wound with a degree of overlap of at least 55%.

9. The cable as claimed in any one of claims 2 to 8, **characterized in that** the insulating jacket comprises:

   a first layer (221) comprising a polyimide aerogel,
   a second layer (222) comprising low-density polytetrafluoroethylene (PTFE), and
   a third layer (223) comprising polytetrafluoroethylene (PTFE).

10. An electrical harness (1) comprising at least one electrical cable as claimed in any one of claims 1 to 9.

FIG.1

FIG.2A

FIG.2B

FIG.3